# EUROPEAN PATENT SPECIFICATION

(11) **EP 1 128 278 B1**
(45) Date of publication and mention of the grant of the patent: **17.09.2003**
(21) Application number: 00103810.8
(22) Date of filing: 23.02.2000
(51) Int. Cl.: G06F 17/30

(54) **Method and apparatus for processing electronic documents**
Methode und Vorrichtung zur Verarbeitung elektronischer Dokumente
Méthode et appareil pour le traitement de documents electroniques

(43) Date of publication of application: 29.08.2001
(73) Proprietor: SER Solutions, Inc, Dulles, VA 20166 (US)
(72) Inventor: GOERKE, Alexander, 79194 Gundelfingen (DE); RABALD, Matthias, 79252 Stegen (DE); RUJAN, Pal, 26121 Oldenburg (DE)
(74) Representative: Betten & Resch

(56) References cited:
- US-A- 5 191 525
- SAIGA H., ET AL.: "An OCR System for Business Cards" PROC. OF THE 2ND INT. CONF. ON DOCUMENT ANALYSIS AND RECOGNITION, 20 - 22 October 1993, pages 802-805, XP002142832
- JUNLIANG XUE ET AL.: "Destination Address Block Location on Handwritten Chinese Envelope" PROC. OF THE 5TH INT. CONF. ON DOCUMENT ANALYSIS AND RECOGNITION, 20 - 22 September 1999, pages 737-740, XP002142833

## Description

### Related applications

The present application is related to the European patent application having the application number 99108354.4, having been filed on April 28, 1999.

### Field of the invention

The present invention is related to a method and an apparatus for processing electronic documents, in particular for extracting certain elements from electronic text documents.

### Description of the related art

Nowadays electronic document processing (EDP) becomes more and more important in order to cope with the huge volume of documents which have to be handled by such entities like large corporations, administration offices, or the like. It is common nowadays to have documents in an electronic form, which may be the result of a scanning process and thereafter an optical character recognition (OCR) process to convert written documents into an electronic form.

If a large volume of such documents has to be handled, e.g. in order to store specific data contained therein in an ordered manner like in e.g. a database, then it is desirable that particular pieces of information (elements of the document), such as e.g. the date of birth, the place of birth, or the like, can be extracted from such electronic documents in an automatic manner. If for example a company wishes to automatically process a large volumen of curriculum vitaes, then it could be desirable to extract those data in an automatic manner from the electronic documents. Also for other purposes, like e.g. for extracting accounting information for ERP systems, the extraction of data from text documents could be desirable. There are many applications which can be imagined, for which it could be desirable to have certain text information or text elements, or certain numbers or number information extracted from a text document. The text document can e.g. be any document containing certain data of interest which should be extracted since they belong to a certain category of information which should be extracted.

Conventional extraction systems which can extract specific data from electronic text documents operate such that they search a fixed position in a document where it is assumed that the desired data is located.

Such kind of search algorithms do not perform very well, since they highly depend on documents which have a predefined format where the desired data is always located at the same place.

US-5,191,525 describes a system for automatically processing paper documents based on an automatic extraction and processing of data contained in that documents. For that purpose the documents are first convert into an electronic format. The system may handle different types of documents, and first the type of document has to be identified. For that purpose there are foreseen specific geographic identification areas containing a specific identification word or words based on which the identification of the type of document is made. After the type has been identified, there is based on the knowledge about the composition of this type of document performed a carving of graphical data areas which are extracted from the graphic image. These areas are sent to the recognition subsystem and according to the already well-known knowledge about the type of document they contain a certain type of data which may then be used for further processing this document. The system thus described also depends on a priori knowledge about the composition of the individual documents, in particular about the location where a certain type of data can be expected within a certain type of document.

It is therefore an object of the present invention to improve the conventional methods of extracting certain pieces of data from text documents.

### Summary of the invention

The present invention according to one aspect provides a method and an apparatus for generating a layout document representing an element of the text document which can be used as an input for a classifying apparatus. Due to the particular type of the layout document generated according to this aspect of the present invention, the classifying apparatus is able to carry out an improved classification of a text element represented by the layout document. Thereby an improved extraction of certain text elements from text documents becomes possible.

According to one aspect of the present invention a layout document is generated based on elements of an electronic text document, the layout containing

a representation of elements of said document together with representations of their corresponding position. By generating such a layout document which can be used an an input for a classifying apparatus such as a neural network, it becomes possible to evaluate the elements of a document together with their geometrical context (their neighbouring/surrounding) elements and to thereby make use not only of the format or the content of an element itself but also of other information to evaluate whether the element belongs to a certain category or not. Taking into account not only an element or its format itself, but rather also its surrounding area, respectively the elements contained in the surrounding area, a classifying apparatus receives further hints as to whether a text element belongs to a certain category or not. Those further hints given by the surrounding area and the text elements contained therein can be recognized or learned by a classifying apparatus, such as a neural network, and a thereby trained neural network can provide an improved classification and consequently an improved extraction of elements of text documents.

According to a further aspect of the present invention layouts are generated for a plurality of elements which belong to a certain category, and the so generated layouts are then used to train the classifying apparatus to recognize elements of this category. Preferably the classifying apparatus is a neural network which is trained by the layouts generated for a plurality of elements, and by inputting to the apparatus in the training phase whether the elements for which the layouts have been generated belong to a certain category or not. A so trained neural network or classifying apparatus can then further be used for classifying unknown text elements and for performing an extraction of elements from unknown texts.

According to a further aspect of the present invention a classifying apparatus which has been trained is used to evaluate whether an unknown element belongs to a certain category or not based on a layout document generated for this element, to thereby extract elements from a document which belong to a certain category.

According to a further aspect of the present invention, candidates are identified which according to a certain search criterion could possibly belong to the category to which the extracted data should belong. Preferably a search criterion can be a format of an element, a word search criterion, a fault tolerant word search criterion, or a combbination of such criteria. For each of those candidates then there can be generated a layout document based on the candidate itself, its position in the electronic document, and based on other elements of the electronic document and their position in said document. Preferably those elements are taken into account when generating the layout document which lie within one or more predefined areas, preferably next to or surrounding the candidate.

Based on such a layout document then it is judged whether the candidate actually belongs to the desired category or not.

According to a preferred embodiment of the present invention, the decision whether said candidate belongs to the desired category is made by use of a classifying apparatus which is preferably a neural network. The neural network may have been trained by using layout documents of candidates and by giving further to the neural network as an input whether those candidates belong to the desired category or not.

According to a further preferred embodiment, the decision whether a candidate belongs to the desired category or not is made by using a method or an apparatus as disclosed in European patent application having the application number 99108354.4, having been filed on April 28, 1999, the priority of which is claimed for the present application, and which is incorporated herein by reference.

### Brief description of the drawings

Fig. 1 shows a computer system which can be used to implement an embodiment according to the present invention;
Fig. 2 illustrates an example for a text document from which elements are to be extracted;
Fig. 3 shows an example of a working document crated from a text document;
Fig. 4 shows an example of a user interface for the definition of he layout area;
Fig. 5a shows anexample for a layout area;
Fig. 5b shows an example for a layout document;
Fig. 6 shows an example of a coding scheme for the coding of a candidate box;
Fig. 7 shows an example for the coding of layout document element positions;
Fig. 8 shows an example of a learning phase of a classifying apparatus;
Fig. 9 shows an example of an extraction phase of a classifying apparatus.

### Detailed description of the preferred embodiments

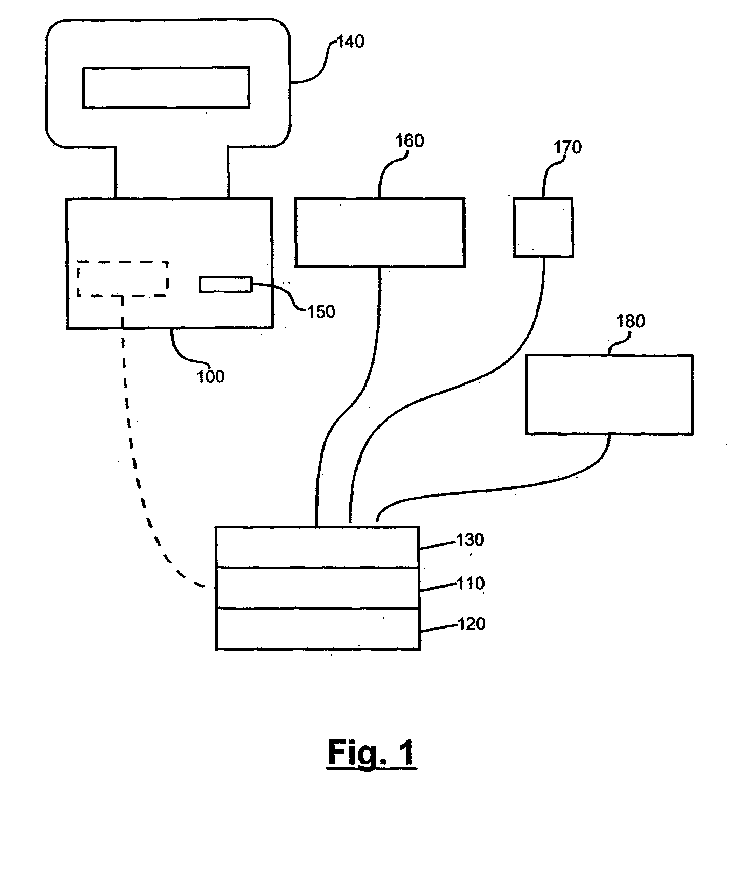

The present invention may be implemented by a computer system as shown in Fig. 1.

Fig. 1 schematically shows the configuration of a computer system to be used in connection with the preferred embodiment of the present invention. The computer 100 contains a CPU 110, a memory 120, and an I/O-unit 130. The computer 100 is capable of executing programs by carrying out computer instructions through CPU 110 which the CPU fetched from memory 120 and which may have been stored in a storage device 150 such as a CD-ROM or a floppy disk. The l/O-unit 130 is connected to a keyboard 160 and a mouse 170 to enable a user to input data to the computer, and it is further connected to a printer 180 to output documents as hardcopies. Computer 100 is further connected to a display unit 140 such as a monitor. It is to be understood that the computer configuration shown in Fig. 1 is an exemplary configuration only, and other computer configurations like parallel processing computers, neural network computers having dedicated hardware, or any other computer systems capable of carrying out the method explained below can be used in connection with the present invention.

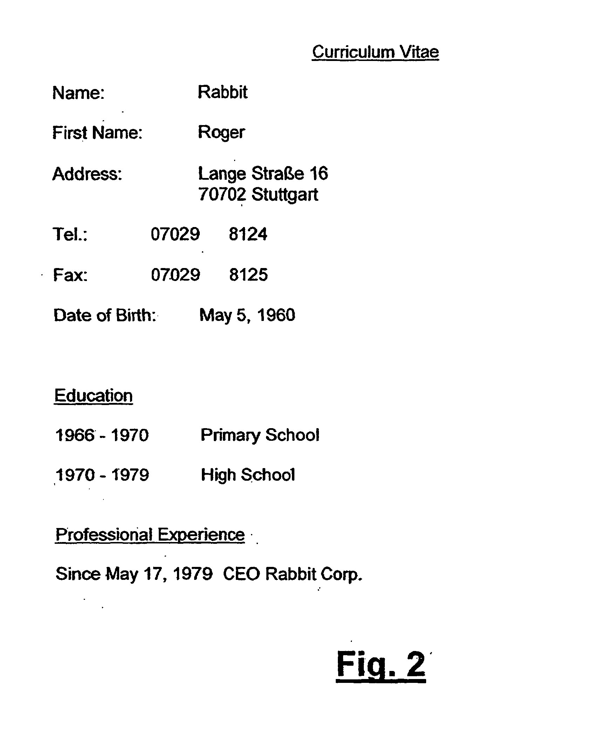

The present invention will hereinafter be described in connection with the extraction of a date of birth from a curriculum vitae as shown in Fig. 2. It will readily be understood by the skilled person that the description of the present invention in connection with the extraction of a date of birth from a curriculum vitae is intended for exemplary purposes only, and that the same method and apparatus as described hereinafter can be applied for any other text documents from which certain pieces of information are to be extracted, such as for example to extract an account number from an accounting form sheet, to extract prices from invoices, to extract values indicating a stock pile in a factory from corresponding sheets, etc.

The curriculum vitae is stored in a computer or on a data carrier in electronic form, it may have been the result of an editing using a word processor, or the electronic document may be the result of a scanning process and a subsequent optical character recognition process. Instead of a curriculum vitae any document may be used from which an element having a specific meaning or falling into a certain category is to be extracted.

At first the electronic document is analyzed to obtain the individual elements out of which it is composed. "Element" here means any sequence of characters which is separated from other elements by a delimitor, such as a blank, a tabulator, an underscore, or by any other data element which is to be interpreted as delimiting one element from another. The most simple way of splitting a text into individual elements is by identifying those textual parts as elements which are separated from each other by any empty space (a blank), however, depending on the purpose of the analysis also further criteria may be taken into account, such as the already mentioned underscore, a hyphen, a carriage return, or other elements of the electronic document which may be regarded as delimiting one element from another. Another criterion which could be taken into account when identifying individual elements could be the geometrical distance between individual characters. For example, there could be defined a threshold value beyond which a distance between two characters is to be interpreted such that the two characters are different elements. In the present example we assume that an element is any single character or sequence of characters seperated from other "elements" by a blank.

In the present example of a text document as shown in Fig. 2, the first two elements would be "curriculum" and "vitae", other elements would be 'Tel:", "Fax:", etc., as will be readily apparent to the skilled person. The elements are identified by e.g. a parser which just searches for blanks.

Apart from obtaining the elements themselves there is obtained their corresponding position in the document, e.g. by calculating the x- and y-coordinates where each element is located in the document. The position will later be used for generating the layout document.

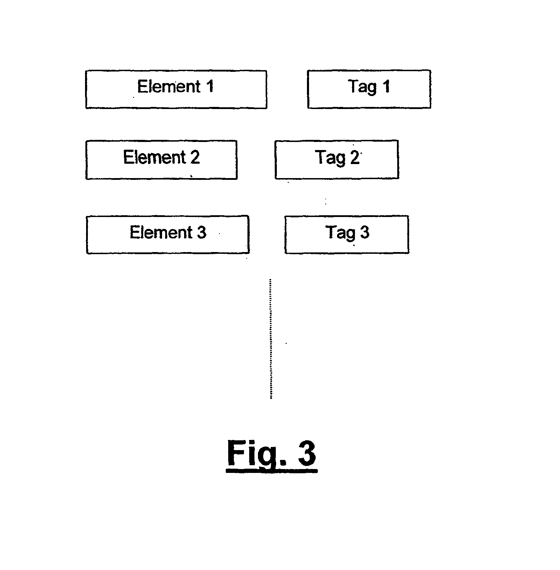

After having identified the individual elements of the electronic text document, those elements are stored in a so-called "working document". In the working document each element which has been identified is stored together with information about its position in the electronic document. For example, the element "curriculum" may be stored together with its x- and y-coordinates identifying its position in the electronic document. The working document is a convenient tool for storing all elements which have been identified together with their corresponding position so that for the generation of the layout document which is explained later in detail reference can be made to the working document. An example of a working document generated from any text document is shown in Fig. 3. The tags Tag1, Tag2, etcetera contain the position information of the corresponding elements. This information may be represented in any form, e.g. by directly storing the x- and y-coordinates of the elements in the tags. The elements in Fig. 3 may be for example the individual words identified in a text document, or any other character sequences as identified through the method explained before as elements, and the tags then contain information about the position of those elements, such as where with respect to their x- and y-coordinates they are located. The tags may also further comprise indications of the style of the elements, their font, whether they are underlined or not, or any similar information. For example, for a bold faced element the corresponding tag may comprise the character sequence "bf" representing that the element is in bold faced characters, another character sequence may represent that the element is underlined, or the like.

The position of an element may represent for example the center of gravity of an element calculated based on its individual pixel values, or it may represent any other geometrical information representing the location of the element. For example, a box may be constructed surrounding the element, and the average between the maximum and minimum x-coordinates of the box may be taken as the x-coordinate for the position, and the average of the maximum and the minimum y-position of the box may be used as the y-coordinate of the element when representing its position in the text through a corresponding tag in the working document.

The working document contains a list of the identified elements together with fags indicating their respective position and possibly also further information as mentioned before, such as further information like about the fonts of the elements, their style, whether they are underlined or not, etcetera.

In this way the working document is created and as containing a list of the individual elements of the electronic text document together with their corresponding position an possibly also other information. Also non-textual elements may be incorporated into the working document, such as horizontal or vertical lines or grids contained in the electronic document, which then are also stored in the working document in a form representing their position and their shape (horizontal, vertical, line, grid, or the like) according to a coding scheme. E. g. a horizontal line may be represented in a working document by character sequence AAAA, a vertical line may bre represented by character sequence BBBB, each then followed by a tag indicationg the position of the line.

The so created working document may then be used for identifying candidate elements which could possibly be the element to be extracted. For that purpose the working document (or possibly also the "source document" based on which the working document is generated) is parsed to identify those elements which meet a certain search criterion, such as a format criterion. In this step of extracting a candidate all elements are analyzed to find possible candidates for the desired elements to be extracted.

Preferably not only individual elements are searched but also combinations of elements so that the method can cope with spaces between the individual elements. For example, when searching for a banking account number which is presumed to have eight digits, a search may be carried out for a number which has eight digits which may either be represented as "99999999" or as "999 999 99" or as "9 9 9 9 9 9 9 9", or any other combination. Searching for such a banking account number may therefore for example be carried out by searching for a number having eight digits. Depending on the informational content which the element to be extracted should have, another format may be used as the search criterion. Possible search criteria are searching for regular expressions (such as a format search searching for a certain format, like a character string, a sequence of numbers, possibly also requiring a certain total number of digits), or the like. Another search criterion could be that a search is performed for a simple predefined element, by carrying out a string comparison. For example a search may be performed for the word "birth", and each element meeting that search criterion would then show up as a candidate.

Another possible search criterion could be to use a so-called designator search, which means that a element is searched which is at a certain position (left/right/above/below) /below) with respect to a candidate found by another search criterion. For example, if a search criterion would be to search for the word "birth", then a designator search could be performed for the element located right to the element "birth", and in this case the resulting candidate would be the element located right to the element "birth". In the example of Fig. 2, with such a designator search the element "May 5, 1960" would show up as a candidate.

Another search criterion could be to carry out a search for all elements which are also present in a database.

The search for candidates preferably is fault tolerant in the way that prefixes/suffixes can be ignored, in order to ignore typical errors from optical character recognition, or to be able to ignore such elements like "," and ":". For example, in the case of Fig. 2 a word search could be performed for the word "birth" by using such a fault tolerant search, for example by using a wildcard. A search would then be performed for the element "birth^{*}" so that the element "birth:" would show up as a candidate. From the designator search the actual date located right to the element "birth" could then be obtained as a candidate.

Depending on the manner the candidate search is performed, more or less candidates for the elements to be extracted are identified.

Other search methods could for example include a trigram search, which means that combinations of three characters are searched for. This is also a method of carrying out a fault tolerant search, if for example a misspelling occurs in a candidate, then a trigram search could nevertheless obtain such a candidate since several character sequences contained in the candidate would be recognized as correct trigrams. Another fault tolerant search method would be to use the Levenshtein distance, which is a representation of the number of key strokes necessary on a keyboard to change one character sequence into another one. Based on the Levenshtein distance also a fault tolerant search could be performed.

Preferably the candidate search is performed by searching the workin document for elements which match the used search criterion. Thereby the analyisis of the document into elements which has already been carried out can be used. In principle, howewer, a search for candidates can also be carried out directly on the text document.

The search is directed to obtain candidate elements which could possibly contained the information which is searched for. It is readily apparent that depending on the information which is searched for the search criterioa have to be adapted accordingly. If an account number is searched, then preferably a format criterion is used which makes use of the possibly known number format of the account number, to the contrary, if a place of birth is searched for, then searching for character strings is more promising then searching for numbers. The adaption of the search criteria (format search, word search, database search, designator search, etc. or a combination of them) to the particular piece of information which is searched can be choosen by the skilled person depending on the particular circumstances.

If the found candidates are to be used in a training procedure for a classifying apparatus as will be described later in more detail, then it is preferable if they are somehow indicated or displayed to the user an if the user is then able to confirm whether the found candidates match with the searched information or not. Thereby the classifying apparatus then can be trained as will be explained later. Displaying the candidates can be e.g. done by highlighting them in the searched text document, and to then enable the user to confirm or to discard them e.g. by a mouse click

The format search or fault tolerant element search provides candidates for elements to be extracted. The result of the candidate search is already quite good in terms of correctness since it is based on inherent properties of the elements which are searched, such as their format or their actual informational content. The candidates then can howewer be further evaluated with respect to wether they belong to a certain category or not by taking into account elements other than the candidates as well, as will be explained in the following.

For each of the candidates then there is created a so-called layout document containing not only a representation of the candidate and its position in the electronic document, but also of other elements surrounding said candidate element and their corresponding position. Therefore the layout document is an electronic representation of the candidate and its position in the electronic document itself, as well as of other elements in the electronic document and their corresponding position. Preferably a layout document generated for a certain candidate is generated for a certain area surrounding said candidate. This area (or a corresponding plurality of areas) can either be predefined or they may be defined by a user.

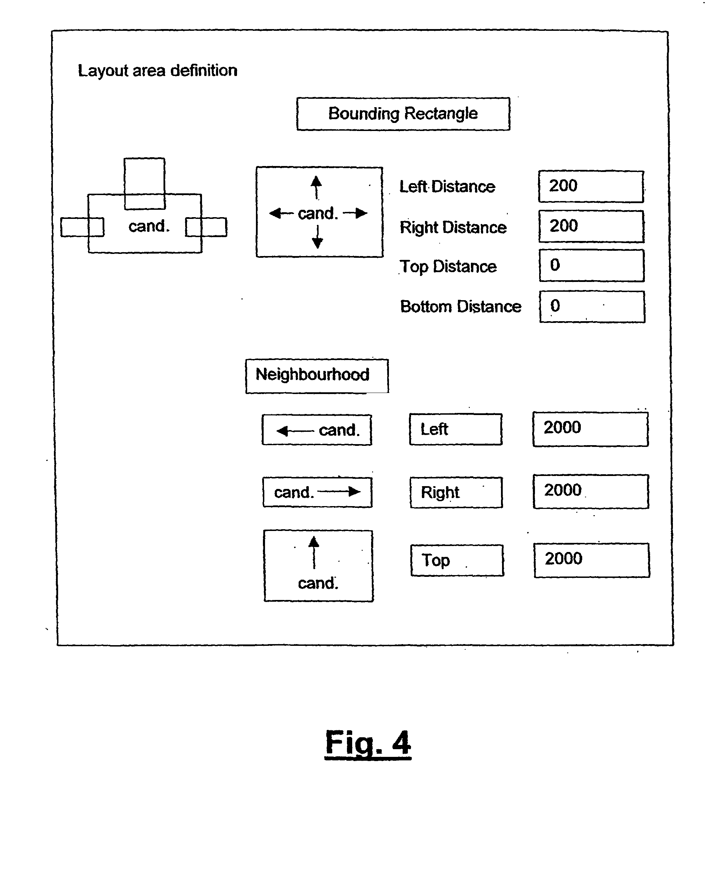

An example for the definition of such a surrounding area through a user interface is shown in Fig. 4. Fig. 4 shows how in total four boxes surrounding said candidate can be defined by a user. A first box surrounds the candidate in all directions, a second box represents the neighbourhood to the left of the candidate, a third box represents the neighbourhood to the right of the candidate, and a fourth box represents the neighbourhood above the candidate. Optionally also a further box representing the neighbourhood below the candidate may be used. The user can dimension the size of the boxes e.g. by inputting values representing their size in dots per inch or in any other unit like e.g. pixels, mm, or the like. In the example of Fig. 4 the size of the boxes can be dimensioned by the user, however, they may also be predefined. The area for generating the layout document can be defined by the user depending on the specific category of element a user wishes to extract.

For generating the layout document all the elements which with respect to their position in the electronic document fall into the boxes defining the area of the layout document are taken into account for generating the layout document. For that purpose reference can be made to the working document in which all elements are stored together with their corresponding positions.

In the following it is assumed that the process of obtaining candidate elements has returned the element May 5, 1960 of the document of Fig. 2 as a candidate. This can e.g. the result of a format search searching for a combination of three individual elements in series, and where the three elements should contain two integer numbers (representing day and year) and a further number or word representing the month. The search result would then be the series of the three elements. Also other search criteria can be imagined leading to May 6, 1960 as a candidate, such as a designator search which searches for three elements next to the element "birth", then also resulting in May 6, 1960 as being output as a candidate. Any other searches for regular expressions could also result in a candidate as May 6,1960, such as a search for a regular expression which contains three elements, wheras two of th three elements are numbers and the third element is a word or a number, and where one of the numbers lies within a range between 1 and 31. It is readily appearent to a skilled person that many definitions of search criteria are possible which could lead to candidates for an piece of information being a "date".

After one or more candidates have been obtained through a search procedure as explained above, for each of the candidates there is created a layout document which is a representation of the candidate as well of ist surrounding area. To create the layout document the elements which lie within an area to be used for the generation of the layout document are at first identified and then based on these elements the layout document is created. It contains a representation of the candidate as well as of the elements lying within this area together with the corresponding position of those elements.

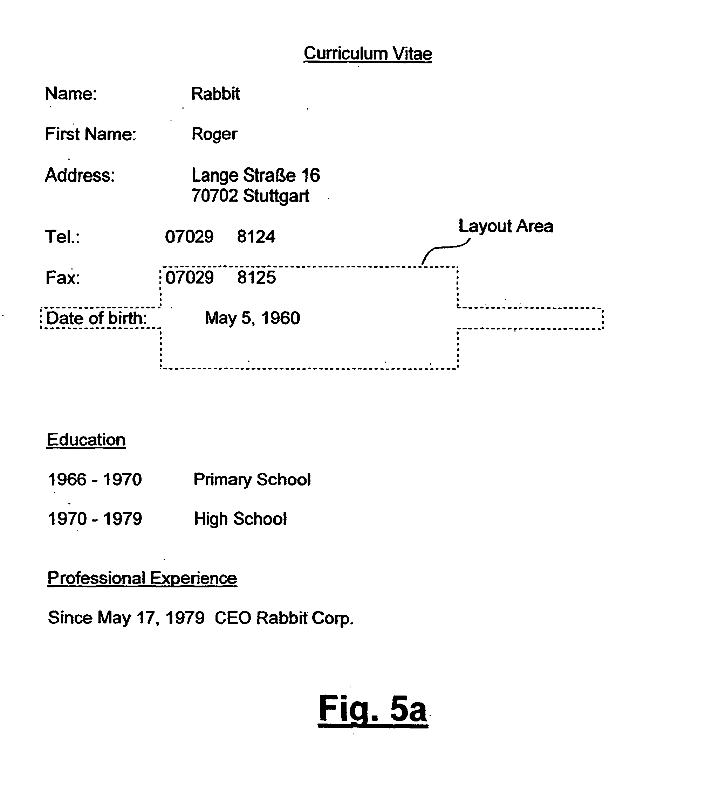

Fig. 5a shows an example for a layout area in case of the text document of Fig. 2. The candidate here is "May 5, 1960", and the dashed line in Fig. 5a defines the layout area surrounding the candidate. All elements of the document of Fig. 2, respectively of Fig. 5a which fall into this area are used for generating the layout document. The area shown in Fig. 5a may be the result of a user definition using an interface like the one of Fig. 4, or it may also be predefined.

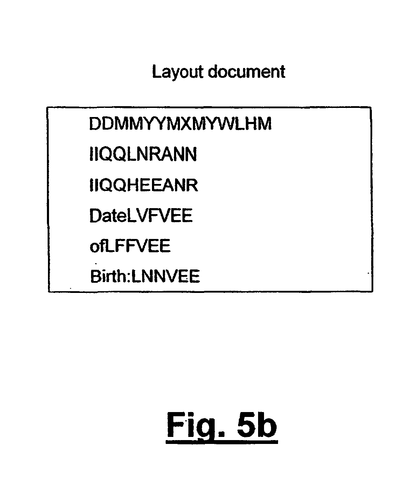

An example for the layout document generated for the candidate "May 5, 1960" and the corresponding layout area as shown in the example of Fig. 5a is shown in Fig. 5b. The first line of the layout document corresponds to the element "May 5, 1960" itself. It is represented in the layout document by the character sequence "DDMMYY", since according to the particular implementation of the present embodiment it is recognized that its format corresponds to a "date". However, it is not necessary but only a preferable option when generating the layout document that a recognizable element the format of which can be recognized is replaced in the layout document by a corresponding representation of said format, like here by DDMMYY as a representation of the format "date". The character sequence to the right of the sequence "DDMMYY" represents the position of this element in the electronic document, as will be explained later in more detail.

The first line of the layout document shown in Fig. 5b therefore corresponds to the candidate element "May 5, 1960". The position of the candidate in the electronic document shown in Fig. 2 and also its size is represented by the character sequence "MXMYWLHM", as will become more clear from the following explanation.

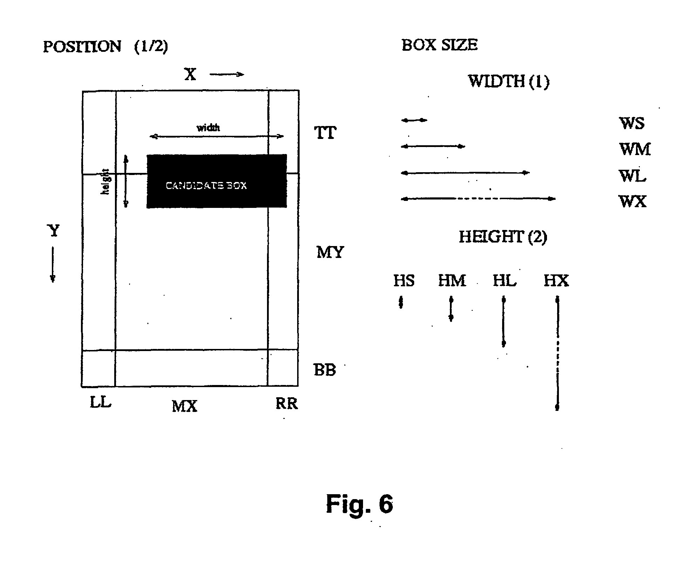

To further explain how the position of the candidate element in the electronic document is represented in the layout document through the character sequence "MXMYWLHM", reference is made to Fig. 6. Fig. 6 shows a so-called candidate box which means the bounding rectangle of the candidate element. Depending of the size of the candidate element (e.g. depending on the font) also the size of the candidate box varies and can be represented in the layout document using the coding scheme for the box size as schematically illustrated in the righthand part of Fig. 6. Based on this coding scheme the box size is coded as "WLHM" which means that the candidate box has a "large width" (WL) and "medium height' (HM), as can be seen from Fig. 6. This coding sequence leads then to the last four characters WLHM in the first line of the layout document of Fig. 5b. It is readily understood that which actual values are represented by which coding sequence, in other words which values are to be coded as "small" and which as "large" depend on the particular implementation and are a mere matter of choice to the skilled person.

Therefore, as can be seen from the first line of the layout document shown in Fig. 5b, not only the position of the candidate box (representing the position of the candidate itself) in the document is coded as will be explained later, but also the size of the candidate box (representing the size of the candidate). The representation of the size of the candidate box through a corresponding coding sequence is schematically illustrated on the bottom part of the right-hand side of Fig. 6. A candidate box which has a small candidate with in X-direction is coded as "WS" (for "width small"), a medium-sized candidate box is coded as "WM" (for "width medium"), a candidate box having a large extension into the X-direction is coded as "WL" (for "width large"), and an extra large candidate box having an extra large size into the X-direction is coded as "WX" ( for "width extra large"). Similarly, which values are to be assigned which coding sequences are a matter of choice to the skilled person.

Similarly to the width also the height of the candidate box is coded by one of the sequences "HS", "HN", "HL", or by "HX". For the present case of Fig. 5b with the candidate May 5,1960, the candidate box is coded as "WLHM", which means that it has a large extension into the X-direction and a medium-sized extension into the Y-direction.

The position of the candidate box in X- and Y-direction is coded as schematically illustrated in the lefthand part of Fig. 6. For that purpose certain areas of the document shon in Fig. 2 are assigned certain coding sequences, as shown in Fig. 6 on the lefthand part. Depending on the area in which the candidate box is located, the X- and Y-position the candidate box are coded either as "LL", "MX", "RR" (for the X-position), and as "TT", "MY", or "BB" for the Y-position).

In the present case of Fig. 5a for the candidate May 5, 1960 the candidate box with respect to its location in X-direction is medium, which means that it is not very far to the right of the document and not very far to the left of the document, but rather in the middle of the document with respect to its X-position. Such a location is coded by the character sequence "MX", as can be seen from the lefthand part of Fig. 6. The Y-position of the candidate box is coded by the sequence "MY", since it is with respect to its Y-position relatively in middle of said document. From that the position coding "MXMY" as shown in the first line of the layout document can be derived from the candidate box. Combining the representation of the format representation of the candidate, the postion of the candidate box and the sizie of the candidate box results in the character sequence shown in the first line of Fig. 5b

It is to be understood that the coding shown in Fig. 6 for the candidate box is only exemplary and other codes, other assignments between position and code, and other splittings of te document into corresponding areas can be used as well. The granularity of the size and the position of the candidate box may be finer or coarser than in Fig 6 depending on the particular implementation as will be easily recognized by he skilled person.

Similarly, the coding sequences used herein are just arbitrary, here "LL" means just "to the very left", "MX" means "rather in the middle in X-direction", and "RR" means "at the very right of the document (in X-position)". Similarly, "TT" means "at the very top", "MY" means "rather in the middle", and "BB" means "at the very bottom of the document with respect to Y-direction". Howewer, other coding sequences could be used as well as will be recognized by the skilled person. Also, instead of DDMMYY other character sequences could be used to represent the recognied format of a "date".

After having coded the candidate box as explained above the other elements which fall into the area of the layout document as explained with respect to Fig. 5a then also are coded and incorporated into the layout document.

The layout document as shown in Fig. 5b has been created based on a area which is shown in Fig. 5a by the dashed line. As already explained before, the surrounding area may be set differently to a smaller area, depending on the user preferences and on the computing workload which can be processed by the computer in use, and it may of course also be set larger. Therefore the layout are used herein is to be understood as an exemplary example only, and other area definitions could be used as well. Of course, the larger the area used the more information is contained in the layout document created from this area and therefore it is possible that with an increased area the accuracy of the further evaluation of the layout document increases. This may, howewer, depend on the particular implementation and on the particular purpose, and with small layout areas good results may be obtained as well.

The second line of the layout document of Fig. 5b is a representation of the Fax number 07029 8125 shown in Fig. 5a and falling into the layout area. Since according to the particular implementation of the present embodiment it is recognized that the two elements 07029 and 8125 falling into the layout area consist of interger numbers, they are represented in the layout document by a coding sequence assigned to the representation of integer numbers, namely IIQQ.

The second and the third line of the layout document shown in Fig. 5d represent the area code 07029 and the number 8125, respectively. The coding sequence IIQQ representing an integer then is respectively followed by a coding sequence representing the relative position of the integer in the text document of Fig. 2 with respec to the candidate element.

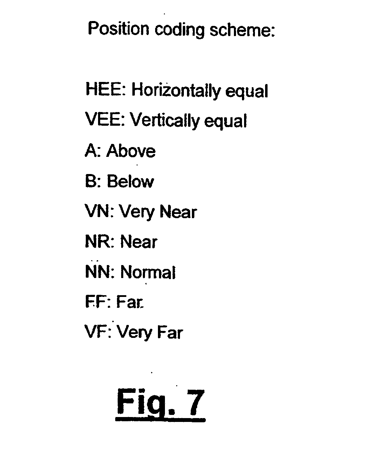

For coding the relative position any coding scheme can be used, the particular one used herein is schematically illustrated in Fig. 7. For the purpose of coding discrete ranges of distances corresponding to relative positions in the X-and the Y-directions are assigned corresponding coding seqences, like "NR" for near, "FF" for far, "HEE" for being at an equal position in horizontal direction, "VFF" for being at an equal position in the vertical direction, and so on. The particular coding scheme is illustrated in Fig. 7 but it will be understood that this is a mere example and can very easily be modified. E.g. the coding sequences can be different, the partitioning into discrete ranges can be different, the number of ranges, an so on.

From Fig. 7 in connectio with Fig. 5b it will be understood that the second line of the layout document of Fig. 5b is based on the fact that the area code 07029 is near to the left(LNR) and near above (ANR) the candidate box which leads to a. position coding sequence LNRANR as shown in the second line of Fig. 5b as appended to the integer code IIQQ.

Since the number 8125 is horizontally equal but near above the candidate this leads to the third line in Fig. 5b which reads IIQQHEEANR.

The remaining three elements "date", "of", and "birth:" falling into the layout area are represented in the last three lines of the layout document of Fig.5b together with their corresponding position coding sequences which will be readily understood in connection with Fig.7. All elements are vertically equal to the candidate (VEE) but at different horizontal distances from the candidate.

It will be readily apparent that instead of the relative position coding also absolute positions of the elements within the layout area could be used for generating the layout document

Furthermore it is also possible that when generating the layout document other such elements for which the format is recognizable, not only for example such as if the element has the format of a "date", are coded in the layout document by a corresponding coding sequence. While this is here only shown for the date in the first line and the integers in the second and third line of the layout document, sucha replacement can also be made for other recognizable elements such as postal ZIP codes (which could be recognized from a database query) and which could be represented by a certain character sequence such as ZZZ, or the like. The corresponding recognition can either be based on a format recognition, on a database query (where e.g. all postal ZIP codes are stored).

As explained above, a layout document is generated which contains information about the candidate itself, its position in the document, and furthermore information about other elements of the document and their position in the document. The position information is in the present example represented by replacing coordinate values by character sequences representing a position according to a certain coding scheme which is used to define locations or areas into which the electronic document is partitioned for coding purposes and which have assigned corresponding character codes. Similarly, number codes can be used as well for coding the positions of the elements of said electronic document. Any coding scheme which represents the position and/or the format of the elements can be used for the generation of the layout document

The layout document may also contain additional information about non-textual elements of the document to be analyzed, such as lines, or grids in the document. This information also can be easily obtained through a geometrical analysis of the document, and then lines or grids present in a document can be coded in the layout document through corresponding coding sequences, preferably also by representing their corresponding position, possibly also their style and further information.

Preferably the coding scheme used for the generation of the layout document contains a position coding based on having assigned discrete areas of location corresponding position codes as explained before. Further preferably style or format information which can be recognized such as the format or style of elements also is represented in the layout document through corresponding coding sequences. It is, howewer, possible to use only some of those elements of a coding scheme to generate a layout document.

The position indicated in the layout document may be a representation of the geometrical position based on coordinate values, such as the x- and y-coordinate values explained before. It is, howewer, also possible that the position information for an element in the layout document represents the relative position between the candidate and this element, such as the number of elements occurring between this element and the candidate. Thereby it also becomes possible to code the relative position between the andidate and other elements in the layout area through the distance between them through the number of words ocurring between them. Such a coding scheme could e.g. be useful if the text document to be processed actually has not much of an own layout, such as an e-mail message. Alternatively, howewer, for an e-mail a virtual layout could be calculated and used for the further processing instead of the relative position of the elaments as explained before.

The more information is present in the layout document about the candidate and its surrounding elements, the more accurate the layout document and the subsequent processing result can be. However, the more sophisticated the layout document is, the more processing power is needed to create the layout document and to further process it to make the decision, therefore, depending on the desired accuracy of the decision procedure the user or a programmer may choose the area for generating the layout document as well as the information to be used when generating the layout document.

Hereinbefore the obtaining of candidates and the subsequent generation of a layout document for a candidate have been explained. If it is now desired for example that a certain piece of information, namely the date of birthis to be extracted from the document of Fig. 2, then a candidate search is performed on document to obtain candidates for a date. In the case of Fig. 2 a regular expression or format search as explained before would return two candidates which according to the used search criterion could be the date of birth, namely May 5, 1960 and May 17, 1979. For both candidates then there will be generated a layout document as explained before and this layout document is inputted to a classiying apparatus which has been trained to recognize the layout documents generated from actual dates of birth contrary to the layout documents generated from dates which, howewer are not the dates of birth.

Such a recognition becomes possible since the layout document generated from a date of birth contains further hints which make it possible to recognize them as the layout documents from dates of birth rather than any other dates. It is e.g. often the case that the word "birth" occurs in the neighbourhood of the date of birth, and by having a layout document where this term is included there is a further hint that this is the layout document generated from a date of birth. Similarly, other elements occurring in the neighbourhood of the date of birth may also be interpreted as a hint, like the term "place" or the term "of" as is the case in the example of Fig. 5b. Howewer, if e.g. several dates of birth are arranged in a column of a table, the header of the column containing the term "birth", then by coding the position of the term "birth" as explained before this may be used by a classifying apparatus as a hint that the dates in this column are actually dates of birth. In general, the surrounding area or the neighbourhood of a candidate for which a layout document is generated can be used as a hint for the actual informational content of such a candidate by a classifying apparatus. By taking into account the hints given by such a surrounding area or neighbourhood a set of candidates extracted from a document according to any search criteria can he evaluated further as to wether those candidates actually contain the information which is looked for.

Of course, the layout document can also directly be generated for all elements of a text document and then each element can be evaluated based on the so generated layout document as to whether it belongs to a certain desired category or not. Howewer using a candidate search first reduces the computational costs which would arise if a layout document would have to be generated for each element of the text document.

In the following the extraction process and the training process using a classifying apparatus will be explained in more detail.

After the layout document has been generated, it may be used for training a neural network or any other computerized system which can decide whether a certain document belongs to a certain category or class or not. For that purpose, the layout documents of candidates are input to the neural network or any other decision apparatus (classifying apparatus) together with the information whether the layout document corresponds to a correct candidate or not, which means whether the candidate has the desired informational content or not.

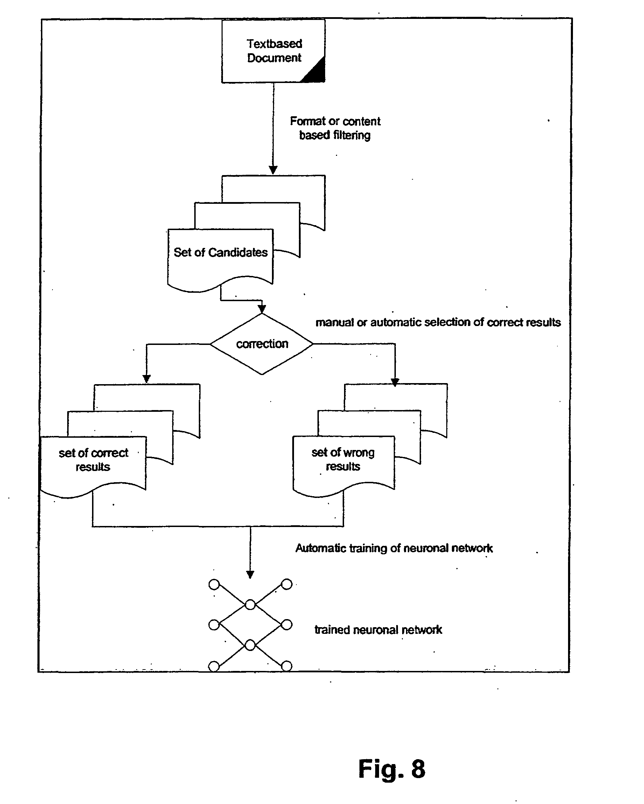

A trainig of such a neural network is schematically illustrated in Fig. 8.

An electronic document is analyzed as explained above to obtain elements and of a text document and their corresponding positions. Preferably then therefrom a textbased document, a working document is created. Then a filtering is performed to obtain therefrom a set of candidates which could possibly match with a desired category. Preferably the obtained set is corrected, either based on a manual. input by the user or automatically, e.g. by cheking whether an obtained candidate has a probability of correctness beyond a certain treshold. For a manual correction in the training phase the candidates can be highlighed in the document and the user can then for some or all of them confirm whether they are correct ones or not. The aforementioned manual or automatic selection of correct results then leads to a set of correct results and to a set of wrong results. For each of the elements of the set of the correct results and for each of the elements of the set of the wrong results then layout documents are generated. Therafter the layout documents generated for the set of wrong results and the ones generated for the set of correct results are used to train the neural network. If no candidate is recognized at all, then the user may also choose himself a candidate, highlight it (e.g. by the mouse) and use it as a training input.

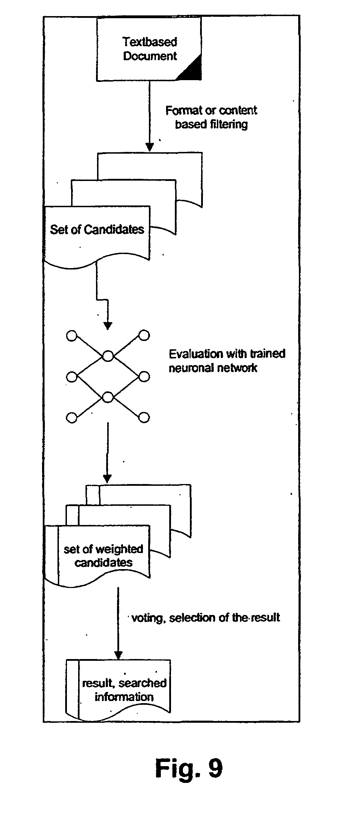

An extraction process using a network which has been trained as shown in Fig. 8 is shown in Fig. 9. A set of candidates is obtained similarly to Fig. 8, for each of them a layout document is generated as explained before. The layouts then are used as inputs for the trained neural network which then decides whether the candidates belong to the desired category or not.

An output of the network may consist in the correctly extracted candidates, or e.g. also in a weight weighing the probability of correctness for each candidate. The extracted candidates may also directly be imported or exported into another electronic document, such as a database, an MS-Excel file, a table, a Word document or any other document suitable for further electronic processing, or the like.

The extraction process including the identification of the candidates and the generation of the layout document can be carried out as explained in detail above. For all found candidates then the corresponding generated layout document is input to a classifying or decision apparatus not necessarily though preferably being a neural network, and then for each candidate a decision is made whether it belongs to the correct category or not .

A particularly suitable apparatus for classifying the generated layout documents as to whether they belong to the desired category or not is disclosed in European patent application 99108354.4, the whole content of which is incorporated hereinto by reference. The apparatus disclosed therein is able to classify text documents by representing them as vectors, where the values of the vector components corresponds to the frequency with which a certain word or term occurs in the document. Such a vector representing a document spans up a n-dimensional vector space, and several documents together also span up a certain vector space. The classification is performed by calculating a hyperplane which separates the vector space into at least two sub-spaces, thereby a classification into as many classes as sub-spaces are present can be performed. A learning or training process consists in building up the vector space and the corresponding separating hyperplane for a set of training documents, and an unknown document then can be classified by calculating whether the corresponding vector falls into one or the other sub-space. Since with the method described hereinbefore in detail it is possible to represent elements of a text document through a layout document which gives hints about their surrounding areas, and since the layout document itself again is a text document, the classifying apparatus disclosed in the aforementioned European patent application can be used for classifying purposes. A preferable implementation of the apparatus for classification disclosed in the patent application consists in a neural network, such as in a Perceptron. Further details as to how the decision apparatus may be implemented can be taken from this application and will therefore not be outlined in further detail herein.

However, it is to be understood that any other neural network or any computer method or apparatus which is capable of evaluating (classifying) documents with respect to whether they belong to a certain category or not can be used for training layout documents and then for making the decision whether a candidate (or ist corresponding layout document) has to be regarded as correctly extracted or not. It should further be understood that also any other layout document presentations can be used in connection with the present invention, not only those layout documents where the positions are represented by character sequences. It is for example also very well possible that the positions are coded by absolute numbers representing the positions (coordinates) or by angles and distances (polar coordinates).

It will be understood by the skilled person that the aforementioned detailed description only illustrates an exemplary embodiment of the present invention, other embodiments being well within the reach of the general knowledge of the skilled person. It is further readily apparent to the skilled person that the method of the present invention may be implemented by any computer system, by any general purpose computer, or by any other dedicated hardware carrying out a method as explained before. An apparatus according to the present invention therefore may consist in any computer system carrying out the method of the present invention, whereas the apparatus may for example consist in a computer system as shown in Fig. 1. As far as certain apparatus elements or apparatus components are mentioned herein or in the appended claims, they may be implemented by a computer or part of a computer which carry, embody, or carry out programs or parts of computer programs. As far as the present invention is related to a computer program or a computer program product, it will be apparent to the skilled person that any data carrier or any computer element such as a memory, a transmission line, or the like, which can embody computer program instructions, can form an embodiment of the present invention in so far as they may embody computer program instructions which enable a computer to carry out a method according to the present invention. The skilled person will also recognize that many computer programs can be written which work according to the principles set forth hereinbefore, so that any computer programs working according to the method of the invention as described herein are to be regareded as falling under the scope of the present invention.

Moreover, a data structure representing the structure of a layout document as described can also form an embodiment of the present invention, independent whether it is incorporated or embodied on a storage medium, a data carrier, a transmission line, a memory such as a ROM, a RAM, or the like.

Furthermore, the present invention may be used in a client-server architecture, which means that parts of a computer program implementing the present invention may be executed at a server and other parts may be executed at a client.

As far as apparatus components are mentioned in the description before or in the appended claims, they may be realized either by a computer carrying out a computer program or certain program instructions, or they may be implemented by any dedicated hardware performing the function of that component, such as an electronic circuit, a special purpose computer, or the like.

Further modifications and applications of the present invention will be apparent to the skilled reader, and it will be understood that the present application has been explained by means of exemplary embodiments which are not to be understood as limiting the scope of the present invention.

In particular, it is to be understood that the example of extracting a date of birth is just an exemplary example, and the method explained hereinbefore can be used for extracting any information element which belongs to a certain category from a text document, as will be readily apparent to the skilled reader.

## Claims

1. A computer-implemented method of generating an input to be used by a classifying apparatus based on an electronic document comprising a plurality of elements, said method being **characterized by**
analyzing said electronic document to obtain one or more of said elements together with information about their corresponding position in said document;
generating an electronic layout document to be used as said input of said classifying apparatus, said electronic layout document comprising:
a representation of a plurality of said elements obtained in said analyzing step together with information representing their absolute and/or relative position in said electronic document.

2. The method of claim 1, wherein said layout document comprises:
a representation of a first one of said plurality elements of said text document together with information representing its absolute and/or relative position in said electronic document, and
a representation of others of said plurality elements of said text document together with information representing their absolute and/or relative position in said electronic document, said other elements lying within a predefined or user defined area neighbouring and/or surrounding said first element.

3. The method of claim 1 or 2, further comprising:
searching for elements meeting a certain searching criterion to obtain candidates for elements which with respect to their informational content fall into a certain category, and
generating a layout document for one or more of said candidate elements.

4. The method of claim 3, wherein said step of searching candidates further comprises one or more of the following:
searching for elements in said document which match a certain format criterion;
searching for words in said document which match a certain string comparison criterion;
performing a fault tolerant word search;
performing a search for an element which has a predefined relative position with respect to a found candidate;
performing a database search for searching elements which match with words stored in a database.

5. The method of one of claims 1 to 4, furher comprising one or more of the following:
representing the position of an element in said layout document by a corresponding character sequence based on a predefined position coding scheme
representing elements which have a recognizable predefined format through a character sequence based on a predefined format coding scheme;
representing elements which have a recognizable meaning through a character sequence based on a predefined meaning coding scheme.

6. The method according to claim 5, wherein
said recognized format comprises one or more of the following:
vertical and/or horizontal lines in said document;
floating point numbers;
dates;
integer numbers;
postal ZIP codes.

7. A method according to any of the preceding claims, wherein
the area taken into account for generating said layout document comprises one or more geometrical areas, the dimensions of which can be predefined or can be set by the user.

8. The method of any of claims 1 to 7, further comprising:
using said electronic layout document as an input for a classifying apparatus for training said classifying apparatus or for evaluating said input through said classifying apparatus.

9. A method for extracting from an electronic document one or more elements which belong to a certain predefined category, said method being **characterised by** comprising:
searching for candidate elements in said document based on one or more predefined search criteria;
for each candidate element obtained from said searching step, generating a layout document according to any of the preceding claims; and
judging if said candidate belongs to said category based on the informational content of said layout document.

10. A method for training a classifying apparatus to train said apparatus for recognizing whether an element of a document belongs to a certain category or not, said method being **characterised by** comprising:
searching for candidate elements in said document based on one or more predefined search criteria;
for each candidate element obtained from said searching step, generating a layout document according to any of the preceding claims; and
inputting said layout together with information as to whether said candidate belongs to the certain category or not into the classifying apparatus to train said classifying apparatus.

11. The method of claim 9 or 10, wherein said classifying apparatus is a neural network.

12. An apparatus for generating an input to be used by a classifying apparatus based on an electronic document comprising a plurality of elements, said apparatus being **characterised by**
an analyzor analyzing said electronic document to obtain one or more of said elements together with information about their corresponding position in said document;
a generator generating an electronic layout document to be used as said input of said classifying apparatus, said electronic layout document comprising:
a representation of a plurality of said elements obtained in said analyzing step together with information representing their absolute and/or relative position in said electronic document.

13. The apparatus of claim 12, wherein said layout document comprises:
a representation of a first one of said plurality elements of said text document together with information representing its absolute and/or relative position in said electronic document, and
a representation of others of said plurality elements of said text document together with information representing their absolute and/or relative position in said electronic document, said other elements lying within a predefined or user defined area neighbouring and/or surrounding said first element

14. The apparatus of claim 12 or 13, further comprising:
a searcher searching for elements meeting a certain searching criterion to obtain candidates for elements which with respect to their informational content fall into a certain category, and
said generator generating a layout document for one or more of said candidate elements.

15. The apparatus of claim 14, wherein said searcher searching for candidates further comprises one or more of the following:
an element searcher searching for elements in said document which match a certain format criterion;
a word searcher searching for words in said document which match a certain string comparison criterion;
a word searcher performing a fault tolerant word search;
an element searcher performing a search for an element which has a predefined relative position with respect to a found candidate;
a database searcher performing a database search for searching elements which match with words stored in a database.

16. The apparatus of one of claims 12 to 15, wherein said layout generator further is adapted to one or more of the following when generating said layout document
representing the position of an element in said layout document by a corresponding character sequence based on a predefined position coding scheme
representing elements which have a recognizable predefined format through a character sequence based on a predefined format coding scheme;
representing elements which have a recognizable meaning through a character sequence based on a predefined meaning coding scheme

17. The apparatus according to claim 16, wherein
said recognized format comprises one or more of the following:
vertical and/or horizontal lines in said document;
floating point numbers;
dates;
integer numbers;
postal ZIP codes.

18. The apparatus according to any of claims 12 to 17, wherein
the area taken into account for generating said layout document comprises one or more geometrical areas the dimensions of which can be predefined or can be set by the user.

19. The apparatus of any of claims 12 to 18, further comprising:
said classifying apparatus which uses said electronic layout document as an input for training said classifying apparatus or for evaluating said input through said classifying apparatus.

20. An apparatus for extracting from an electronic document one or more elements which belong to a certain predefined category, said apparatus being **characterised by**
a searcher searching for candidate elements in said document based on one or more predefined search criteria;
a generator for for each candidate element obtained from said searching step, generating a layout document according to any of the preceding claims; and
a judger judging if said candidate belongs to said category based on the informational content of said layout document.

21. A a classifying apparatus trainable to recognize whether an element of a document belongs to a certain category or not, said apparatus being **characterised by**
a searcher searching for candidate elements in said document based on one or more predefined search criteria;
a generator generating for each candidate element obtained from said searcher a layout document according to any of the preceding claims; and
means for inputting said layout together with information as to whether said candidate belongs to the certain category or not into the classifying apparatus to train said classifying apparatus.

22. The apparatus of claim 20 or 21, wherein said classifying apparatus is a neural network.

23. A computer program comprising computer executable program code, said program code being **characterised by** being adapted to cause said computer to carry out any of the methods according to one of claims 1 to 11.

24. A data structure to be used as an input in a classifying apparatus, said data structure being **characterised by** being derived by carrying out any of the methods according to one of claims 1 to 11.

## Patentansprüche

1. Computerimplementiertes Verfahren zur Erzeugung eines von einer Klassifiziervorrichtung zu verwendenden Inputs basierend auf einem elektronischen Dokument, welches eine Vielzahl von Elementen umfaßt, wobei das Verfahren **gekennzeichnet ist durch**:
Analysieren des elektronischen Dokuments, um eine oder mehrere der Elemente zusammen mit Informationen über ihre jeweilige Position in dem Dokument zu erhalten;
Erzeugen eines elektronischen Layout-Dokuments, das als der Input der Klassifiziervorrichtung verwendet werden soll, wobei das elektronische Layout-Dokument aufweist:
eine Repräsentation einer Vielzahl von in dem Analysierschritt erhaltenen Elementen zusammen mit Informationen, die deren absolute und/oder relative Position in dem elektronischen Dokument repräsentieren.

2. Verfahren nach Anspruch 1, wobei das Layout-Dokument aufweist:
Eine Repräsentation eines ersten Elements von einer Vielzahl von Elementen des Textdokuments zusammen mit Informationen, die dessen absolute und/oder relative Position in dem elektronischen Dokument repräsentieren; und
eine Repräsentation von anderen der Vielzahl von Elementen des Textdokuments zusammen mit Informationen, die deren absolute und/oder relative Position in dem elektronischen Dokument repräsentieren, wobei die anderen Elemente innerhalb eines vordefinierten oder benutzerdefinierten Gebiets liegen, das dem ersten Element benachbart ist und/oder dieses umgibt.

3. Verfahren nach Anspruch 1 oder 2, welches ferner aufweist;
Suchen nach Elementen, die einem bestimmten Suchkriterium entsprechen, um Kandidaten für Elemente zu erhalten, welche bezüglich ihres Informationsinhalts in eine bestimmte Kategorie fallen; und
Erzeugen eines Layout-Dokuments für eines oder mehrere der Kandidatenelemente.

4. Verfahren nach Anspruch 3, wobei der Schritt des Suchens von Kandidaten ferner einen oder mehrere der folgenden Schritte aufweist:
Suchen nach Elementen in dem Dokument, die ein bestimmtes Formatkriterium erfüllen;
Suchen nach Worten in dem Dokument, die ein bestimmtes String-Vergleichskriterium erfüllen;
Durchführen einer fehlertoleranten Wortsuche;
Durchführen einer Suche nach einem Element, welches eine vorbestimmte relative Position in Bezug auf einen aufgefundenen Kandidaten aufweist;
Durchführen einer Datenbankabfrage zum Suchen von Elementen, welche mit in einer Datenbank gespeicherten Worten übereinstimmen.

5. Verfahren nach einem der Ansprüche 1 bis 4, welches femen einen oder mehrere der folgenden Schritte aufweist:
Repräsentieren der Position eines Elements in dem Layout-Dokument durch eine entsprechende Zeichensequenz basierend auf einem vordefinierten Positionscodierungsschema;
Repräsentieren von Elementen, welche ein erkennbares vordefiniertes Format aufweisen, durch eine Zeichensequenz basierend auf einem vordefinierten Formatcodierungsschema;
Repräsentieren von Elementen, welche eine erkennbare Bedeutung aufweisen, durch eine Zeichensequenz basierend auf einem vordefinierten Bedeutungscodierungsschema.

6. Verfahren nach Anspruch 5, wobei
das erkannte Format eines oder mehrere der folgenden umfaßt:
Vertikale und/oder horizontale Linien in dem Dokument;
Fließkommazahlen;
Datumsangaben;
ganze Zahlen;
Postleitzahlen.

7. Verfahren nach einem der vorhergehenden Ansprüche, wobei die Fläche, die zur Erzeugung des Layout-Dokuments berücksichtigt wird, eine oder mehrere geometrische Flächen aufweist, deren Dimensionen vordefiniert sein können oder vom Benutzer gesetzt werden können.

8. Verfahren nach einem der Ansprüche 1 bis 7, welches ferner aufweist:
Benutzen des elektronischen Layout-Dokuments als einen Input für eine Klassifiziervorrichtung zum Trainieren der Klassifiziervorrichtung oder zum Auswerten des Inputs durch die Klassifiziervorrichtung.

9. Verfahren zum Extrahieren von einem oder mehreren Elementen aus einem elektronischen Dokument, welche zu einer bestimmten vordefinierten Kategorie gehören, wobei das Verfahren **dadurch gekennzeichnet ist, daß** es aufweist:
Suchen nach Kandidatenelementen in dem Dokument basierend auf einem oder mehreren vordefinierten Suchkriterien;
Erzeugen eines Layout-Dokuments gemäß einem der vorhergehenden Ansprüche für jedes Kandidatenelement, das durch den Suchschritt erhalten wird; und
Beurteilen, ob der Kandidat zu der Kategorie gehört, und zwar basierend auf dem Informationsinhalt des Layout-Dokuments.

10. Verfahren zum Trainieren einer Klassifiziervorrichtung, um die Vorrichtung dazu zu trainieren, zu erkennen, ob ein Element eines Dokuments zu einer bestimmten Kategorie gehört oder nicht, wobei das Verfahren **gekennzeichnet ist dadurch**, daß es aufweist:
Suchen nach Kandidatenelementen in dem Dokument basierend auf einem oder mehreren vordefinierten Suchkriterien;
Erzeugen eines Layout-Dokuments gemäß einem der vorhergehenden Ansprüche für jedes Kandidatenelement, das **durch** den Suchschritt erhalten wird; und
Eingeben des Layout-Dokuments in die Klassifiziervorrichtung, um die Klassifiziervorrichtung zu trainieren, und zwar zusammen mit Informationen, die festlegen, ob der Kandidat zu der bestimmten Kategorie gehört oder nicht.

11. Verfahren nach Anspruch 9 oder 10, wobei
die Klassifiziervorrichtung ein neuronales Netz ist.

12. Vorrichtung zum Erzeugen eines Inputs, der von einer Klassifiziervorrichtung verwendet werden soll, basierend auf einem elektronischen Dokument, welches eine Vielzahl von Elementen umfaßt, wobei die Vorrichtung **gekennzeichnet ist durch**:
einen Analysator zum Analysieren des elektronischen Dokuments, um eine oder mehrere der Elemente zusammen mit Informationen über ihre jeweilige Position in dem Dokument zu erhalten;
einen Generator zum Erzeugen eines elektronischen Layout-Dokuments, das als der Input der Klassifiziervorrichtung verwendet werden soll, wobei das elektronische Layout-Dokument aufweist:
eine Repräsentation einer Vielzahl von in dem Analysierschritt erhaltenen Elementen zusammen mit Informationen, die deren absolute und/oder relative Position in dem elektronischen Dokument repräsentieren.

13. Vorrichtung nach Anspruch 12, wobei das Layout-Dokument aufweist:
Eine Repräsentation eines ersten Elements von einer Vielzahl von Elementen des Textdokuments zusammen mit Informationen, die dessen absolute und/oder relative Position in dem elektronischen Dokument repräsentieren; und
eine Repräsentation von anderen der Vielzahl von Elementen des Textdokuments zusammen mit Informationen, die deren absolute und/oder relative Position in dem elektronischen Dokument repräsentieren, wobei die anderen Elemente innerhalb eines vordefinierten oder benutzerdefinierten Gebiets liegen, das dem ersten Element benachbart ist und/oder dieses umgibt.

14. Vorrichtung nach Anspruch 12 oder 13, welche ferner aufweist:
einen Sucher zum Suchen nach Elementen, die einem bestimmten Suchkriterium entsprechen, um Kandidaten für Elemente zu erhalten, welche bezüglich ihres Informationsinhalts in eine bestimmte Kategorie fallen; und
den Generator zum Erzeugen eines Layout-Dokuments für eines oder mehrere der Kandidatenelemente.

15. Vorrichtung nach Anspruch 14, wobei der Sucher zum Suchen nach Kandidaten ferner eines oder mehrere der folgenden Merkmale aufweist:
Einen Elementsucher zum Suchen nach Elementen in dem Dokument, die ein bestimmtes Formatkriterium erfüllen;
einen Wortsucher zum Suchen nach Worten in dem Dokument, die ein bestimmtes String-Vergleichskriterium erfüllen;
einen Wortsucher zum Durchführen einer fehlertoleranten Wortsuche;
einen Elementsucher zum Durchführen einer Suche nach einem Element, welches eine vorbestimmte relative Position in Bezug auf einen aufgefundenen Kandidaten aufweist;
einen Datenbankabfrager zum Durchführen einer Datenbankabfrage zum Suchen von Elementen, welche mit in einer Datenbank gespeicherten Worten übereinstimmen.

16. Vorrichtung nach einem der Ansprüche 12 bis 15, wobei das Layout-Dokument ferner an eines oder mehrere der folgenden Merkmale angepaßt ist:
Repräsentieren der Position eines Elements in dem Layout-Dokument durch eine entsprechende Zeichensequenz basierend auf einem vordefinierten Positionscodierungsschema;
Repräsentieren von Elementen, welche ein erkennbares vordefiniertes Format aufweisen, durch eine Zeichensequenz basierend auf einem vordefinierten Formatcodierungsschema;
Repräsentieren von Elementen, welche eine erkennbare Bedeutung aufweisen, durch eine Zeichensequenz basierend auf einem vordefinierten Bedeutungscodierungsschema.

17. Vorrichtung nach Anspruch 16, wobei
das erkannte Format eines oder mehrere der folgenden umfaßt:
Vertikale und/oder horizontale Linien in dem Dokument;
Fließkommazahlen;
Datumsangaben;
ganze Zahlen;
Postleitzahlen.

18. Vorrichtung nach einem der Ansprüche 12 bis 17, wobei die Fläche, die zur Erzeugung des Layout-Dokuments berücksichtigt wird, eine oder mehrere geometrische Flächen aufweist, deren Dimensionen vordefiniert sein können oder vom Benutzer gesetzt werden können.

19. Vorrichtung nach einem der Ansprüche 12 bis 18, welche ferner aufweist:
die Klassifiziervorrichtung, welche das elektronische Layout-Dokument als einen Input zum Trainieren der Klassifiziervorrichtung oder zum Evaluieren des Inputs durch die Klassifiziervorrichtung verwendet.

20. Vorrichtung zum Extrahieren einer oder mehrerer Elemente, die zu einer bestimmten vordefinierten Kategorie gehören, aus einem elektronischen Dokument, wobei die Vorrichtung **gekennzeichnet ist durch**:
einen Sucher zum Suchen von Kandidatenelementen in dem Dokument basierend auf einem oder mehreren vordefinierten Suchkriterien;
einen Generator zum Erzeugen von einem Layout-Dokument gemäß einem der vorhergehenden Ansprüche für jedes Kandidatenelement, das in dem Suchschritt erhalten wird; und
einen Beurteiler zum Beurteilen, ob das Kandidatenelement zu der Kategorie gehört, basierend auf dem Informationsinhalt des Layout-Dokuments.

21. Klassifiziervorrichtung welche trainierbar ist, um zu erkennen, ob ein Element eines Dokuments zu einer bestimmten Kategorie gehört oder nicht, wobei die Vorrichtung **gekennzeichnet ist durch**
einen Sucher zum Suchen von Kandidatenelementen in dem Dokument basierend auf einem oder mehreren vordefinierten Suchkriterien;
einen Generator zum Erzeugen von einem Layout-Dokument gemäß einem der vorhergehenden Ansprüche für jedes Kandidatenelement, das von dem Sucher erhalten wurde; und
eine Einrichtung zum Eingeben des Layout-Dokuments zusammen mit Informationen dahingehend, ob der Kandidat zu der bestimmten Kategorie gehört oder nicht, in die Klassifiziervorrichtung, um die Klassifiziervorrichtung zu trainieren.

22. Vorrichtung nach Anspruch 20 oder 21, wobei
die Klassifiziervorrichtung ein neuronales Netzwerk ist.

23. Computerprogramm, welches von einem Computerprogramm ausführbaren Programmcode umfaßt, **dadurch gekennzeichnet ist, daß** er angepaßt ist, den Computer zu veranlassen, ein Verfahren gemäß einem der Ansprüche 1 bis 11 auszuführen.

24. Datenstruktur zur Verwendung als Input in einer Klassifiziervorrichtung, wobei die Datenstruktur **dadurch gekennzeichnet ist, daß** sie dadurch erhalten wurde, daß ein Verfahren gemäß einem der Ansprüche 1 bis 11 ausgeführt wurde.

## Revendications

1. Procédé mis en oeuvre par ordinateur pour produire une entrée à utiliser par un appareil de classement sur la base d'un document électronique comprenant une pluralité d'éléments, ledit procédé étant **caractérisé par** :
l'analyse dudit document électronique pour obtenir un ou plusieurs desdits éléments en même temps que des informations concernant leur position correspondante dans ledit document ;
la production d'un document électronique de mise en page à utiliser en tant que dite entrée dudit appareil de classement, ledit document électronique de mise en page comprenant :
une représentation d'une pluralité desdits éléments obtenus dans ladite étape d'analyse en même temps que des informations représentant leur position absolue et/ou relative dans ledit document électronique.

2. Procédé selon la revendication 1, dans lequel ledit document de mise en page comprend :
une représentation d'un premier élément de ladite pluralité d'éléments dudit document de texte en même temps que des informations représentant sa position absolue et/ou relative dans ledit document électronique, et
une représentation d'autres éléments de ladite pluralité d'éléments dudit document de texte en même temps que des informations représentant leur position absolue et/ou relative dans ledit document électronique, lesdits autres éléments se situant à l'intérieur d'une zone prédéfinie ou définie par l'utilisateur voisine et/ou entourant ledit premier élément.

3. Procédé selon la revendication 1 ou 2, comprenant de plus :
la recherche d'éléments satisfaisant à un certain critère de recherche pour obtenir des éléments candidats qui, en ce qui concerne leur contenu informationnel, tombent dans une certaine catégorie, et
la production d'un document de mise en page pour un ou plusieurs desdits éléments candidats.

4. Procédé selon la revendication 3, dans lequel ladite étape de recherche de candidats comprend de plus une ou plusieurs des tâches suivantes :
la recherche d'éléments dans ledit document qui correspondent à un certain critère de format ;
la recherche de mots dans ledit document qui correspondent à un certain critère de comparaison de chaîne de caractères ;
l'exécution d'une recherche de mot tolérante aux défauts ;
l'exécution d'une recherche d'élément qui a une position relative prédéfinie par rapport à un candidat trouvé ;
l'exécution d'une recherche de base de données pour chercher des éléments qui correspondent avec des mots stockés dans une base de données.

5. Procédé selon l'une des revendications 1 à 4, comprenant de plus une ou plusieurs des tâches suivantes :
la représentation de la position d'un élément dans ledit document de mise en page par une séquence de caractères correspondante basée sur un système de codage de position prédéfini ;
la représentation d'éléments qui ont un format prédéfini reconnaissable par l'intermédiaire d'une séquence de caractères basée sur un système de codage de format prédéfini ;
la représentation d'éléments qui ont une signification reconnaissable par l'intermédiaire d'une séquence de caractères basée sur un système de codage de signification prédéfini.

6. Procédé selon la revendication 5, dans lequel
ledit format reconnu comprend un ou plusieurs des éléments suivants :
des lignes verticales et/ou horizontales dans ledit document ;
des nombres en virgule flottante ;
des dates ;
des nombres entiers ;
des codes postaux.

7. Procédé selon l'une quelconque des revendications précédentes, dans lequel
la zone prise en compte pour la production dudit document de mise en page comprend une ou plusieurs zones géométriques dont les dimensions peuvent être prédéfinies ou qui peuvent être fixées par l'utilisateur.

8. Procédé selon l'une quelconque des revendications 1 à 7, comprenant de plus :
l'utilisation dudit document électronique de mise en page en tant qu'entrée pour un appareil de classement pour l'apprentissage dudit appareil de classement ou pour l'évaluation de ladite entrée par ledit appareil de classement.

9. Procédé d'extraction à partir d'un document électronique d'un ou plusieurs éléments qui appartiennent à une certaine catégorie prédéfinie, ledit procédé étant **caractérisé en ce qu'**il comprend :
la recherche d'éléments candidats dans ledit document sur la base d'un ou plusieurs critères de recherche prédéfinis ;
pour chaque élément candidat obtenu à partir de ladite étape de recherche, la production d'un document de mise en page selon l'une quelconque des revendications précédentes ; et
la détermination si ledit candidat appartient à ladite catégorie sur la base du contenu informationnel dudit document de mise en page.

10. Procédé d'apprentissage d'un appareil de classement pour apprendre audit appareil à reconnaître si un élément d'un document appartient ou non à une certaine catégorie, ledit procédé étant **caractérisé en ce qu'**il comprend :
la recherche d'éléments candidats dans ledit document sur la base d'un ou plusieurs critères de recherche prédéfinis ;
pour chaque élément candidat obtenu à partir de ladite étape de recherche, la production d'un document de mise en page selon l'une quelconque des revendications précédentes ; et
l'entrée de ladite mise en page en même temps que des informations quant à savoir si ledit candidat appartient ou non à la catégorie en question dans l'appareil de classement pour l'apprentissage dudit appareil de classement.

11. Procédé selon la revendication 9 ou 10, dans lequel
ledit appareil de classement est un réseau neuronal.

12. Appareil pour produire une entrée à utiliser par un appareil de classement sur la base d'un document électronique comprenant une pluralité d'éléments, ledit appareil étant **caractérisé par** :
un analyseur analysant ledit document électronique pour obtenir un ou plusieurs desdits éléments en même temps que des informations concernant leur position correspondante dans ledit document ;
un générateur produisant un document électronique de mise en page à utiliser en tant que dite entrée dudit appareil de classement, ledit document électronique de mise en page comprenant :
une représentation d'une pluralité desdits éléments obtenus dans ladite étape d'analyse en même temps que des informations représentant leur position absolue et/ou relative dans ledit document électronique.

13. Appareil selon la revendication 12, dans lequel ledit document de mise en page comprend :
une représentation d'un premier élément de ladite pluralité d'éléments dudit document de texte en même temps que des informations représentant sa position absolue et/ou relative dans ledit document électronique, et
une représentation d'autres éléments de ladite pluralité d'éléments dudit document de texte en même temps que des informations représentant leur position absolue et/ou relative dans ledit document électronique, lesdits autres éléments se situant dans une zone prédéfinie ou définie par l'utilisateur voisine et/ou entourant ledit premier élément.

14. Appareil selon la revendication 12 ou 13, comprenant de plus :
un dispositif de recherche pour chercher des éléments satisfaisant à un certain critère de recherche pour obtenir des éléments candidats qui, en ce qui concerne leur contenu informationnel, tombent dans une certaine catégorie, et
ledit générateur produisant un document de mise en page pour un ou plusieurs desdits éléments candidats.

15. Appareil selon la revendication 14, dans lequel ledit dispositif de recherche pour chercher des candidats comprend de plus un ou plusieurs des éléments suivants :
un dispositif de recherche d'élément pour chercher des éléments dans ledit document qui correspondent à un certain critère de format ;
un dispositif de recherche de mot pour chercher des mots dans ledit document qui correspondent à un certain critère de comparaison de chaîne de caractères ;
un dispositif de recherche de mot pour effectuer une recherche de mot tolérante aux défauts ;
un dispositif de recherche d'élément effectuant une recherche d'un élément qui a une position relative prédéfinie par rapport à un candidat trouvé ;
un dispositif de recherche de base de données effectuant une recherche base de données pour chercher des éléments qui correspondent à des mots stockés dans une base de données.

16. Appareil selon l'une des revendications 12 à 15, dans lequel ledit générateur de mise en page est de plus conçu pour effectuer une ou plusieurs des tâches suivantes lors de la production dudit document de mise en page :
la représentation de la position d'un élément dans ledit document de mise en page par une séquence de caractères correspondante basée sur un système de codage de position prédéfini;
la représentation d'éléments qui ont un format prédéfini reconnaissable par l'intermédiaire d'une séquence de caractères basée sur un système de codage de format prédéfini ;
la représentation d'éléments qui ont une signification reconnaissable par l'intermédiaire d'une séquence de caractères basée sur un système de codage de signification prédéfini.

17. Appareil *selon* la revendication 16, dans lequel
ledit format reconnu comprend un ou plusieurs des éléments suivants :
des lignes verticales et/ou horizontales dans ledit document ;
des nombres à virgule flottante ;
des dates ;
des nombres entiers ;
des codes postaux.

18. Appareil selon l'une quelconque des revendications 12 à 17, dans lequel
la zone prise en compte pour la production dudit document de mise en page comprend une ou plusieurs zones géométriques dont les dimensions peuvent être prédéfinies ou qui peuvent être fixées par l'utilisateur.

19. Appareil selon l'une quelconque des revendications 12 à 18, comprenant de plus :
ledit appareil de classement qui utilise ledit document électronique de mise en page en tant qu'entrée pour l'apprentissage dudit appareil de classement ou pour l'évaluation de ladite entrée par ledit appareil de classement.

20. Appareil pour l'extraction à partir d'un document électronique d'un ou plusieurs éléments qui appartiennent à une certaine catégorie prédéfinie, ledit appareil étant **caractérisé par** :
un dispositif de recherche pour chercher des éléments candidats dans ledit document sur la base d'un ou plusieurs critères de recherche prédéfinis ;
un générateur pour produire un document de mise en page, selon l'une quelconque des revendications précédentes, pour chaque élément candidat élément obtenu à partir de ladite étape de recherche ; et
un dispositif de détermination pour déterminer si ledit candidat appartient à ladite catégorie sur la base du contenu informationnel dudit document de mise en page.

21. Appareil de classement susceptible d'apprendre à reconnaître si un élément d'un document appartient ou non à une certaine catégorie, ledit appareil étant **caractérisé par** :
un dispositif de recherche pour chercher des éléments candidats dans ledit document sur la base d'un ou plusieurs critères de recherche prédéfinis;
un générateur produisant pour chaque élément candidat obtenu à partir dudit dispositif de recherche un document de mise en page selon l'une quelconque des revendications précédentes ; et
des moyens pour entrer ladite mise en page en même temps que des informations quant à savoir si ledit candidat appartient ou non à la catégorie en question dans l'appareil de classement pour l'apprentissage dudit appareil de classement.

22. Appareil selon la revendication 20 ou 21, dans lequel
ledit appareil de classement est un réseau neuronal.

23. Programme informatique comprenant un code de programme exécutable par un ordinateur, ledit code de programme étant **caractérisé en ce qu'**il est conçu pour amener ledit ordinateur à effectuer l'un quelconque des procédés selon l'une des revendications 1 à 11.

24. Structure de données à utiliser en tant qu'entrée dans un appareil de classement, ladite structure de données étant **caractérisée en ce qu'**elle est obtenue en exécutant l'un quelconque des procédés selon l'une des revendications 1 à 11.
